# EUROPEAN PATENT SPECIFICATION

(11) **EP 4 541 607 B1**
(45) Date of publication and mention of the grant of the patent: **18.11.2026**
(21) Application number: 24188219.0
(22) Date of filing: 12.07.2024
(51) Int. Cl.: B60C 29/00, B60C 29/06

(54) **PLASTIC CAP WITH REDUCED DIAMETER FOR INFLATION VALVES FOR TIRES OF COMMERCIAL VEHICLES**
KUNSTSTOFFKAPPE MIT REDUZIERTEM DURCHMESSER FÜR REIFENVENTILE VON NUTZFAHRZEUGEN
CAPUCHON EN PLASTIQUE À DIAMÈTRE RÉDUIT POUR VALVES DE GONFLAGE DE PNEUS DE VÉHICULES UTILITAIRES

(30) Priority: 18.10.2023 IT 202300021738
(43) Date of publication of application: 23.04.2025
(73) Proprietor: Wonder SPA, 26100 Cremona (IT)
(72) Inventor: BERGONZI, Lorenzo, I-26100 CREMONA (IT); GOSI, Matteo, I-26100 CREMONA (IT); PERSICO, Stefano, I-26100 CREMONA (IT)
(74) Representative: Gualeni, Nadia

(56) References cited:
- EP-A2- 1 176 035
- DE-U1- 20 003 891
- US-A1- 2003 217 595
- US-A1- 2018 162 184

## Description

The present invention relates to a valve for inflating tires of commercial vehicles (known as truck valves), also of the type that may be associated with a TPMS transducer.

The term "valves for commercial vehicles" refers to valves for inflating tires for trailer trucks, articulated trucks, light commercial vehicles, trailers, tractors, etc.

The sector of reference is therefore that of valves for inflating tires of rubber wheels of commercial vehicles, the valve of which is fixed to the wheel of the commercial vehicle by means of a rim hole with a diameter of about 9.7 mm, therefore much smaller than a rim hole for cars, having a diameter greater than 11.3 mm. These valves may also be associated with TPMS (Tire Pressure Monitoring System) technology, wherein electronic sensors for detecting and transmitting certain operating parameters of the tires, in particular pressure (but also temperature), are mounted directly on said valve.

Valves for commercial vehicles have a body formed of a shaped head (for example cylindrical or polygonal) and an elongated stem that allows for the inflation/deflation operations of the tire. The head of the valve may optionally be associated with a transducer containing the electronic sensors for monitoring the internal pressure of the tire, and the stem is closed by a cap. It should be noted that this stem may be straight or bent, or even in some cases bent in numerous places. The attachment of the valve to the wheel rim is accomplished by means of special screw-locking means, generally comprised of a nut that screws onto a female thread obtained on the portion of the valve stem protruding outward from the rim.

Valves for commercial vehicles, including therefore the nut and the cap, are made of metal, generally untreated or nickel-plated brass, or aluminum.

In the field of valves for commercial vehicles, metal caps with an outer diameter smaller than the inner diameter of the retaining nut are known to be used so that the nut may slide freely over the cap and allow two-step mounting (inserting the stem with the cap through the hole in the rim and tightening the nut), rather than a three-step process (inserting the stem through the hole in the rim, tightening the nut, screwing the cap onto the stem). Therefore, in order to reduce the time for the valve to be mounted on the rim, the valve body and the cap are usually first assembled together in a valve-cap assembly which is subsequently inserted into the rim hole in such a way that the stem of the valve protrudes outside the rim, and the transducer, where present, is housed inside the tire. The valve-cap assembly is clamped to the rim by means of the nut which, by sliding over the cap and screwing onto the shank, abuts against the head, with a seal or an O-ring interposed therebetween, on the inner edge of the rim. In addition to the nut, a washer may also be present.

One of the problems with the known metal caps for truck valves is related to the fact that, in the case of, for example, aluminum or uncoated brass valves, said metal caps, if not protected by a surface coating, tend to stick to the stem, making them difficult to unscrew. Furthermore, the thread made on the metal requires high precision and, in the event of burrs or deformations, screwing difficulties may be encountered. Again, being made of metal, the cap is machined by turning in the solid part, resulting in a relatively expensive component of the valve. Furthermore, as mentioned above, it usually also has to be protected by a coating, such as a nickel coating, which further increases the cost.

Caps for valves for inflating tires of commercial vehicles made of a plastic material are also known in the field, shown for example in the previous documents US 2018/162184 A1 and US 2003/217595 A1.

Therefore, in the field of valves for inflating tires of commercial vehicles, there is a need for caps with a reduced diameter, which therefore allow installation in two steps, which have equivalent strength but are made of a material other than metal.

This need is satisfied by a valve cap for inflating tires of commercial vehicles according to claim 1, as well as a related valve according to claim 9. Other embodiments of the cap and the valve according to the invention are described in the subsequent claims.

Further features and advantages of this invention will become more apparent from the following detailed description of a preferred, non-limiting embodiment thereof, in which:
- Fig. 1 is an exploded view of a valve provided with a cap according to the present invention, in one embodiment;
- Fig. 2 is an exploded view of a valve provided with a cap according to the present invention, in a further embodiment;
- Fig. 3 is a sectional view of the valve-cap assembly of the valve in Fig. 1, in the step of sliding the nut over the cap;
- Fig. 4 is a sectional view of the valve-cap assembly of the valve in Fig. 2, in the step of sliding the nut over the cap;
- Fig. 5a through 5c show in detail the cap in Fig. 1, in an axonometric, side, and sectional view along the plane A-A, respectively, of Fig. 5b;
- Fig. 6a through 6c are detailed views of the cap in Fig. 1, in an axonometric, side, and sectional view along the plane B-B, respectively, of Fig. 6b.

In the above figures, identical or similar elements are denoted by the same reference signs.

With reference to the aforementioned figures, the reference sign 1 is used to generally denote a valve 1 for inflating tires for commercial vehicles, which valve may also be associated with a transducer for TPMS technology.

The valve 1 comprises a valve body 10 provided with a head 11 below which a stem 18 extends.

In one embodiment, the valve body 10 is made as a single piece, which means that the head 11 and the stem 18 are integrally formed. In a further embodiment, the head 11 and the stem 18 are mechanically connected so as to form the valve body 10.

In the variant embodiment shown in the figures, the stem 18 is straight, i.e., rectilinear. In a further embodiment, not shown, the stem 18 is curved, i.e., provided with one or more bends.

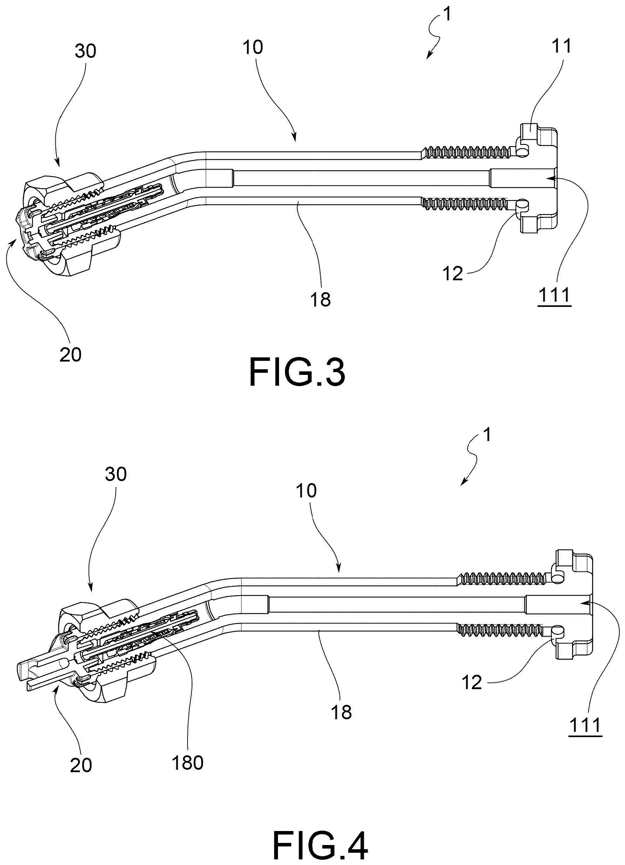

The stem 18 comprises an end portion 181 in which a mechanism 180 for inflating/deflating the tire is inserted, which may be seen for example in Fig. 3 to 4.

The valve 1 therefore comprises a mechanism 180 for inflating/deflating the tire, which mechanism is inserted in the valve body 10.

The end portion 181 of the stem 18 may be associated with a cap 20 which may be screwed onto said stem via an outer thread 214.

In the pre-assembled configuration, the valve 1 therefore comprises a cap 20 screwed onto the valve body 10.

The stem 18, below the head 11, is provided with an outer nut thread 215 to allow a locking nut 30 to be screwed thereon.

In the assembled configuration on the rim, the valve 1 therefore comprises a locking nut 30 which is fitted and screwed onto the valve body 10. The valve 1 is thus suitable for being stably fixed to the rim by means of the locking nut 30, screwed onto the stem 18 below the head 11.

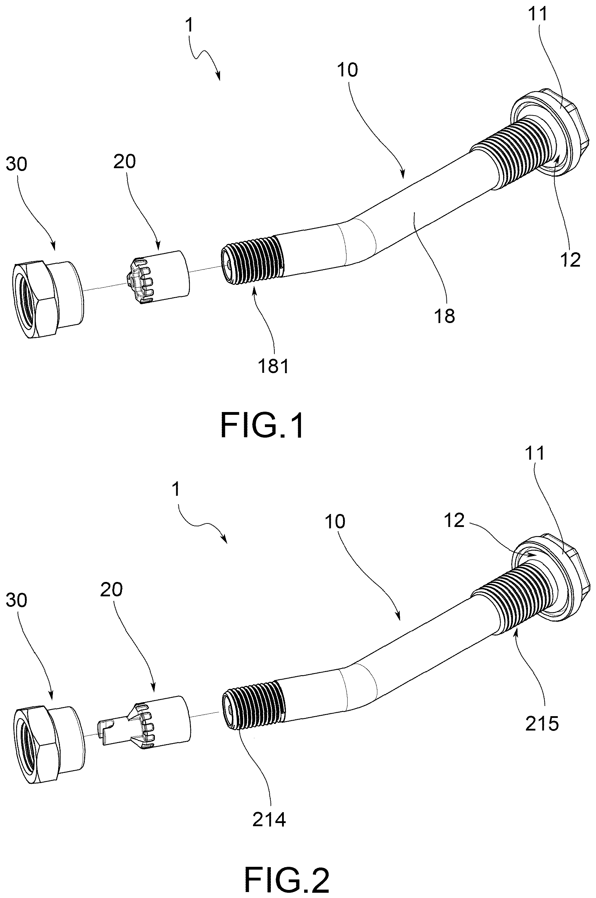

The head 11 of the valve 1 may have different configurations. With reference to Fig. 1 and 2, the valve 1 is provided with a cylindrical head 11. Alternative shapes for the valve 1 may comprise cylindrical or polygonal heads 11.

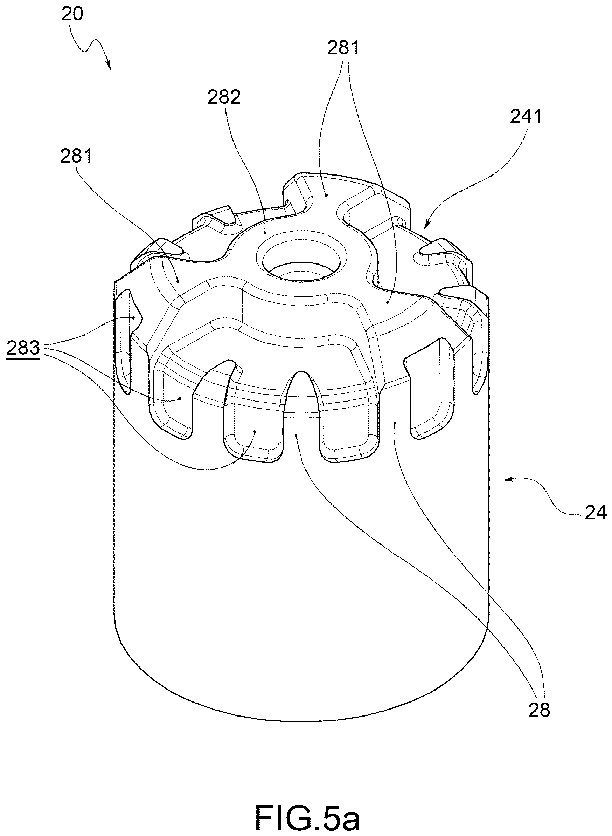

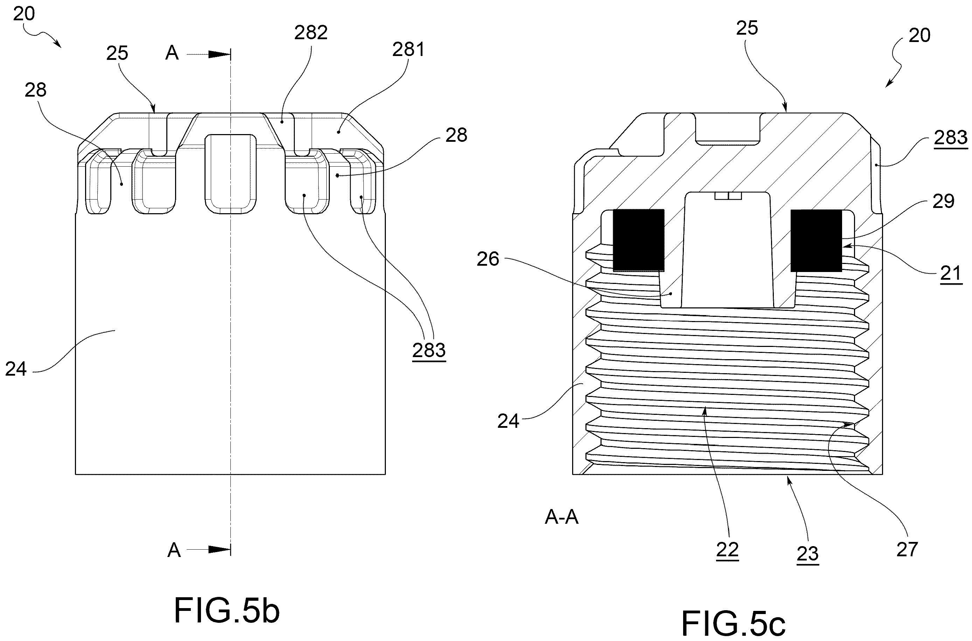

When coupled to a transducer, as is the case with the valve in Fig. 3 and 5, the head 11 is provided with an axial hole 111 having an inner thread to allow the insertion of a drilled screw suitable for holding the transducer engaged with the head 11 of the valve 1. In this embodiment, in a configuration of assembly on the rim, the valve 1 also comprises a transducer 3 and a drilled screw: the head 11 and the transducer 3 are penetrated by a drilled screw which allows them to be fixed together and for the air to pass through.

Preferably, a sealing gasket 12 is interposed between the inner edge of the rim and the head 11 of the valve 1, which abuts against said rim. Preferably therefore, the valve 1 also comprises a gasket 12 fitted onto the valve body 10.

The gasket 12 is preferably made of elastomeric material, for example an O-ring or a shaped gasket known as a Grommet.

As the valve 1 according to the present invention is a valve for commercial vehicles, it is suitable for being fixed to the wheel of said vehicle by being inserted into a hole with a diameter between 9.7 mm and 10 mm made in the rim.

Therefore, the maximum outer diameter of the stem 18, i.e., at the outer nut thread 215, is between 9.2 mm and 10 mm.

As regards the nut 30, it has a minimum inner diameter of not less than 8.5 mm.

In the valve 1 according to the present invention, the valve body 10 and the nut 30 are preferably made of metal, while the cap 20 is made of a plastic material.

For example, the valve body 10 and the nut 30 are made of brass or aluminum, preferably nickel-plated brass or painted or anodized aluminum.

The cap 20 is made of plastic material and is rigid in nature. Preferably, the cap 20 is made of polyamide.

The cap 20 is a plastic cap with reduced diameter, i.e., having an outer diameter smaller than the inner diameter of the nut 30, so that said nut may slide freely over the cap 20 and allow a two-step assembly, as shown in Fig. 3 and 4. Therefore, the valve body 10 and the cap 20 are preassembled together in a valve-cap assembly which is then inserted into the rim hole. The valve-cap assembly is tightened onto the rim by means of the nut 30 which, by sliding over the cap 20 and screwing onto the stem 18 at the outer given thread 215, abuts the head 11, with the interposition of the gasket 12, on the internal edge of the rim.

Referring now to Fig. 5a through 6c, the cap 20 of the valve 1 has an open end 23, a flat and closed upper wall 25, and an annular side wall 24 defining a cavity 22 suitable for housing the end portion of the stem 18 (as shown in Fig. 3).

The cap 20 is internally provided with an inner thread 27, which extends from the open end 23 and stops before reaching the upper wall 25. The inner thread 27 of the cap 20 is intended to couple with the outer thread of the cap 214 of the stem 18.

At the bottom of the cavity 22, starting from the upper wall 25, a cylindrical protrusion 27 extends centrally about which an inner gasket 29 is arranged.

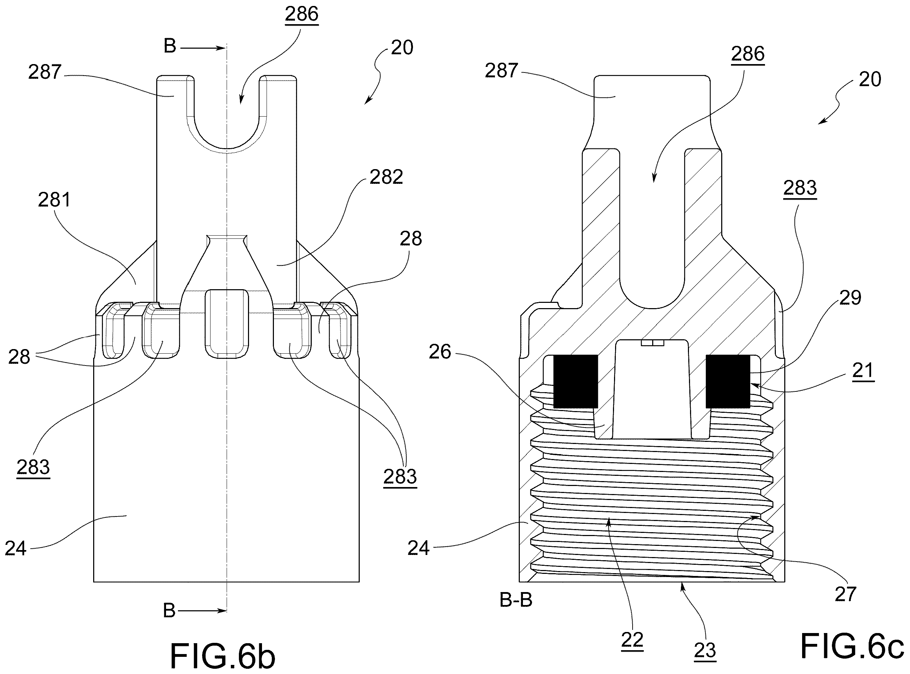

As shown in detail in Fig. 5c and 6c, in fact, the cap 20 includes an inner gasket 29 positioned in an annular housing 21 defined inside the cavity 22. Preferably, the inner gasket 29 is kept in position in the annular housing 21 by means of an abutment edge 26 made on the outer surface of the cylindrical protrusion 27. For example, the abutment edge 26 is obtained by heating and deforming the end of the cylindrical protrusion 27.

The inner gasket 29 may also be fixed in position within the cavity 22 by other methods, for example by friction, or by adhesive or ultrasonic welding.

The inner gasket 29 may be made of rubber, plastic or other suitable sealing material. In one embodiment, the inner gasket 29 forms a generally hermetic seal between the cap 20 and the stem 18. Alternatively, the cap 20 is devoid of an inner seal.

In general, the cap 20 is used to prevent dust and dirt from entering the valve body 10.

As shown in Fig. 3 and 4, the outer diameter of the cap 20 is smaller than the inner diameter of the nut 30 so that the nut may slide on the cap 20 when the valve 1 is mounted on the rim of the tire. Preferably, the maximum outer diameter of the cap 20 is 8.66 mm.

The maximum outer diameter of the cap 20 is minimized by making the side wall 24 as thin as possible, while maintaining a side wall thickness sufficient to give the necessary mechanical strength to the cap. Preferably, the side wall 24 has a minimum thickness of 0.45 mm or less at the inner thread 27.

The cap 20 is provided with a plurality of friction elements 28 (such as, for example, longitudinal or radial ribbings, bosses, embossing, etc.). Advantageously, the friction elements 28 increase the tactile friction of the cap 20 so that it is easier to grip it during the screwing/unscrewing step of the same.

Preferably, the friction elements 28 do not form a knurling with parallel lines, but a sequence of parallel planes in relief with respect to the outer surface of the side wall. Preferably, the friction elements 28 are longitudinal ribbings protruding from the outer surface. In this example, a valley 283 is defined between two adjacent ribbings.

The friction elements 28 extend at the side wall 24, preferably for the entire circumference of the cap 20, but only at an upper portion of the side wall 24, on the side opposite the inlet opening 23. It should be noted that the friction elements 28 extend into a portion of the side wall 24 internally devoid of the inner thread 27, as seen in Fig. 5c and 6c. In particular, the friction elements 28 extend on an outer surface of the side wall 24 at a zone that is internally devoid of the inner thread 27.

Advantageously, this construction choice makes it possible to greatly minimize the thickness of the side wall 24 which, at the inner thread 27, is occupied only by said thread, since it is not necessary to accommodate other structures such as the friction elements 28.

The friction elements 28 also extend at the connection edge 241 between the side wall 24 and the upper wall 25, until they at least partially occupy the upper wall 25. In particular, the friction elements 28 extend at least partially on an outer surface of the upper wall 25.

Preferably, in the solution in which the friction elements 28 are longitudinal ribbings, the width of the ribbings at the upper wall 25 is less than the width of the ribbings at the side wall 24.

Preferably, the cap 20 is provided with at least one rib 281 protruding from the outer surface of the upper wall 25. Preferably, the cap 20 is provided with at least two, preferably three ribs 281. The ribs 281 extend from the edge 241 and continue towards the center of the upper wall 25, stopping before reaching it.

Preferably, the width of the rib 281 is greater at the edge 241. Preferably, at the edge 241, the width of the rib 281 is greater than the width of the ribbing 28. Preferably, the width of the rib 281 is at least three times the width of the ribbing 28.

Preferably, the height of the rib 281 is greater than the height of the ribbing 28.

Preferably, when the friction elements 28 are longitudinal ribbings, then at the edge 241 at least one pair of adjacent ribbings joins to form a rib 281.

In general, the ribs 281 have flat upper surfaces and rounded edges.

Preferably, the cap 20 is provided, centrally to the upper wall 25, with a cylindrical protrusion 282. Preferably, the ribs 281 extend until they intercept the protrusion 282.

In the example in Fig. 5a, the upper protrusion 282 is provided with a central recess.

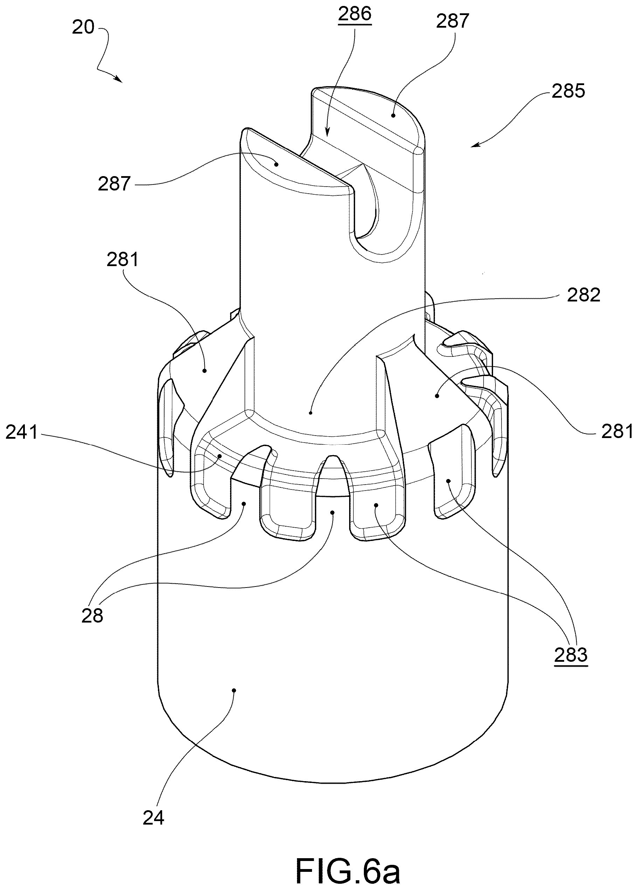

In the example in Fig. 6a, the upper protrusion 282 creates a cylindrical body on the top of which a gripping element 285 is defined, for example in the form of a fork screwdriver provided with a central groove 286 defined between two abutments 287. The cap 20 having an upper wall 25 with a gripping element 285 is useful for easily disassembling the mechanism 180 for inflating/deflating the tire that is housed within the valve body 10.

Innovatively, a plastic cap with reduced diameter for a valve for inflating tires of commercial vehicles according to the present invention allows the valve to be mounted in only two steps, while maintaining high mechanical strength and compatibility with the standardized thread most widespread in the field of commercial vehicles.

The friction elements (be they ribbings or ribs) are arranged on the cap 20 in an area internally devoid of the inner thread 27. Advantageously, this construction choice allows the thickness of the side wall 24 to be significantly minimized. Reasoning in terms of proportions, the position of the friction elements allows the cap 20 to pass through a nut 30 with an inner diameter only 1% larger than the outer diameter of said cap. Therefore, plastic cap thus constructed may work between two threads (outer threading of the cap 214 present on the stem 18 and inner threading of the nut 30) which differ from each other by only about 12% in diameter.

Advantageously, moreover, making the cap 20 of plastic considerably reduces its production costs compared to a cap made of metal. Furthermore, the inner thread 27 of the plastic cap 20 is free to deform, contrary to what happens when a metal cap is threaded, facilitating the screwing of the cap onto the valve stem.

A person skilled in the art may make numerous modifications and variations to the cap and to the valve described above, which modifications and variations are all contained within the scope of the invention as defined in the following claims.

## Claims

1. A plastic cap (20) for a valve for inflating tires of commercial vehicles, comprising:
- a closed upper wall (25) and an annular side wall (24) joined at a connection edge (241); wherein said upper wall (25), said side wall (24), and said edge (241) define externally an outer surface and internally a cavity (22), said cavity being accessible through an open end (23);
- an inner thread (27) arranged in the cavity (22) and extending from the open end (23) and stopping before reaching the upper wall (25);
- a plurality of friction elements (28) protruding from the outer surface;
**characterized in that** it has a maximum outer diameter of 8.66 mm, and **in that** said friction elements (28) are arranged in an area internally devoid of the inner thread (27), extend on an outer surface of the side wall (24) into a zone internally devoid of the inner thread (27) and extend at least partially also on an outer surface of the upper wall (25).

2. Plastic cap (20) according to claim 1, wherein said friction elements (28) also extend on an outer surface of the connection edge (241) between the side wall (24) and the upper wall (25).

3. Plastic cap (20) according to claim 1 or 2, wherein the friction elements (28) are longitudinal ribbings.

4. Plastic cap (20) according to claim 3, comprising at least one protruding rib (281), extending from the edge (241) and continuing towards the center of the upper wall (25), wherein,
- at the edge (241), the rib (281) has a greater width than the ribbings, and/or
- wherein the height of the rib (281) is greater than the height of the ribbing.

5. Plastic cap (20) according to claim 4, wherein, at the edge (241), at least a pair of adjacent ribbings is joined to form a rib (281).

6. Plastic cap (20) according to any one of claims 4 to 5, comprising a cylindrical protrusion (282) arranged centrally to the upper wall (25), and wherein said ribs (281) extend until they intercept said protrusion (282).

7. Plastic cap (20) according to claim 6, wherein said upper protrusion (282) creates a cylindrical body on the top of which a gripping element (285) is defined.

8. Plastic cap (20) according to any one of the preceding claims, wherein the side wall (24) has a minimum thickness not exceeding 0.45 mm at the inner thread (27).

9. A valve (1) for inflating tires of commercial vehicles, comprising:
- a valve body (10) provided with a head (11) below which a stem (18) extends; wherein an inflation/deflation mechanism (180) is arranged inside the stem (18); wherein an end portion (181) of the stem has an outer cap thread (214); and wherein the stem (18) has, below the head (11), an outer nut thread (215);
- a cap (2), according to any one of the preceding claims, screwable to the valve body (10) at the outer cap thread (214);
- a locking nut (30) screwable to the valve body (10) at the outer nut thread (215);
wherein a maximum outer diameter of the cap (20) is less than a minimum inner diameter of the nut (30), so that the latter may slide above the cap (20).

10. Valve (1) according to claim 9, wherein a maximum outer diameter of the stem (18) is between 9.2 mm and 10mm.

11. Valve (1) according to claim 9 or 10, wherein the valve body (10) and the nut (30) are made of metal and the cap (20) is made of plastic.

## Patentansprüche

1. Kunststoffkappe (20) für ein Ventil zum Aufpumpen von Reifen von Nutzfahrzeugen, umfassend:
- eine geschlossene obere Wand (25) und eine ringförmige Seitenwand (24), die an einer Verbindungskante (241) verbunden sind; wobei die obere Wand (25), die Seitenwand (24) und die Kante (241) außen eine Außenfläche und innen einen Hohlraum (22) definieren, wobei der Hohlraum durch ein offenes Ende (23) zugänglich ist;
- ein Innengewinde (27), das im Hohlraum (22) angeordnet ist und sich vom offenen Ende (23) aus erstreckt und vor Erreichen der oberen Wand (25) stoppt;
- eine Vielzahl von Reibungselementen (28), die von der Außenfläche hervorstehen;
**dadurch gekennzeichnet, dass** sie einen maximalen Außendurchmesser von 8,66 mm aufweist, und dadurch, dass die Reibungselemente (28) in einem Bereich angeordnet sind, der innen frei vom Innengewinde (27) ist, sich auf einer Außenfläche der Seitenwand (24) in eine Zone hinein erstrecken, die innen frei vom Innengewinde (27) ist, und sich zumindest teilweise auch auf einer Außenfläche der oberen Wand (25) erstrecken.

2. Kunststoffkappe (20) nach Anspruch 1, wobei sich die Reibungselemente (28) auch auf einer Außenfläche der Verbindungskante (241) zwischen der Seitenwand (24) und der oberen Wand (25) erstrecken.

3. Kunststoffkappe (20) nach Anspruch 1 oder 2, wobei die Reibungselemente (28) Längsriffelungen sind.

4. Kunststoffkappe (20) nach Anspruch 3, umfassend mindestens eine hervorstehende Rippe (281), die sich von der Kante (241) aus erstreckt und sich zur Mitte der oberen Wand (25) hin fortsetzt, wobei,
- die Rippe (281) an der Kante (241) eine größere Breite als die Riffelungen aufweist, und/oder
- wobei die Höhe der Rippe (281) größer als die Höhe der Riffelung ist.

5. Kunststoffkappe (20) nach Anspruch 4, wobei an der Kante (241) mindestens ein Paar benachbarter Riffelungen verbunden ist, um eine Rippe (281) zu bilden.

6. Kunststoffkappe (20) nach einem der Ansprüche 4 bis 5, umfassend einen zylindrischen Vorsprung (282), der zentral zur oberen Wand (25) angeordnet ist, und wobei sich die Rippen (281) so weit erstrecken, bis sie auf den Vorsprung (282) treffen.

7. Kunststoffkappe (20) nach Anspruch 6, wobei der obere Vorsprung (282) einen zylindrischen Körper erzeugt, auf dessen Oberseite ein Greifelement (285) definiert ist.

8. Kunststoffkappe (20) nach einem der vorhergehenden Ansprüche, wobei die Seitenwand (24) am Innengewinde (27) eine Mindestdicke von nicht mehr als 0,45 mm aufweist.

9. Ventil (1) zum Aufpumpen von Reifen von Nutzfahrzeugen, umfassend:
- einen Ventilkörper (10), der mit einem Kopf (11) versehen ist, unter dem sich ein Schaft (18) erstreckt; wobei ein Aufpump-/Ablassmechanismus (180) innerhalb des Schafts (18) angeordnet ist; wobei ein Endabschnitt (181) des Schafts ein äußeres Kappengewinde (214) aufweist; und wobei der Schaft (18) unterhalb des Kopfes (11) ein äußeres Mutterngewinde (215) aufweist;
- eine Kappe (2) nach einem der vorhergehenden Ansprüche, die am äußeren Kappengewinde (214) auf den Ventilkörper (10) aufschraubbar ist;
- eine Sicherungsmutter (30), die am äußeren Mutterngewinde (215) auf den Ventilkörper (10) aufschraubbar ist;
wobei ein maximaler Außendurchmesser der Kappe (20) kleiner als ein minimaler Innendurchmesser der Mutter (30) ist, sodass letztere über die Kappe (20) gleiten kann.

10. Ventil (1) nach Anspruch 9, wobei ein maximaler Außendurchmesser des Schafts (18) zwischen 9,2 mm und 10 mm liegt.

11. Ventil (1) nach Anspruch 9 oder 10, wobei der Ventilkörper (10) und die Mutter (30) aus Metall bestehen und die Kappe (20) aus Kunststoff besteht.

## Revendications

1. Capuchon en plastique (20) pour une valve de gonflage de pneus de véhicules utilitaires, comprenant :
- une paroi supérieure fermée (25) et une paroi latérale annulaire (24) reliées au niveau d'un bord de liaison (241) ; dans lequel ladite paroi supérieure (25), ladite paroi latérale (24) et ledit bord (241) définissent extérieurement une surface externe et intérieurement une cavité (22), ladite cavité étant accessible par une extrémité ouverte (23) ;
- un filetage interne (27) disposé dans la cavité (22) et s'étendant depuis l'extrémité ouverte (23) et s'arrêtant avant d'atteindre la paroi supérieure (25) ;
- une pluralité d'éléments de friction (28) faisant saillie depuis la surface externe ;
**caractérisé en ce qu'**il présente un diamètre externe maximum de 8,66 mm, et **en ce que** lesdits éléments de friction (28) sont disposés dans une zone intérieurement dépourvue du filetage interne (27), s'étendent sur une surface externe de la paroi latérale (24) dans une zone intérieurement dépourvue du filetage interne (27) et s'étendent au moins partiellement également sur une surface externe de la paroi supérieure (25).

2. Capuchon en plastique (20) selon la revendication 1, dans lequel lesdits éléments de friction (28) s'étendent également sur une surface externe du bord de liaison (241) entre la paroi latérale (24) et la paroi supérieure (25).

3. Capuchon en plastique (20) selon la revendication 1 ou 2, dans lequel les éléments de friction (28) sont des nervures longitudinales.

4. Capuchon en plastique (20) selon la revendication 3, comprenant au moins une nervure saillante (281), s'étendant depuis le bord (241) et se prolongeant vers le centre de la paroi supérieure (25), dans lequel,
- au niveau du bord (241), la nervure (281) présente une largeur supérieure à celle des nervures longitudinales, et/ou
- dans lequel la hauteur de la nervure (281) est supérieure à la hauteur de la nervure longitudinale.

5. Capuchon en plastique (20) selon la revendication 4, dans lequel, au niveau du bord (241), au moins une paire de nervures longitudinales adjacentes est reliée pour former une nervure (281).

6. Capuchon en plastique (20) selon l'une quelconque des revendications 4 à 5, comprenant une saillie cylindrique (282) disposée de manière centrale sur la paroi supérieure (25), et dans lequel lesdites nervures (281) s'étendent jusqu'à intercepter ladite saillie (282).

7. Capuchon en plastique (20) selon la revendication 6, dans lequel ladite saillie supérieure (282) crée un corps cylindrique sur le dessus duquel est défini un élément de préhension (285).

8. Capuchon en plastique (20) selon l'une quelconque des revendications précédentes, dans lequel la paroi latérale (24) présente une épaisseur minimale ne dépassant pas 0,45 mm au niveau du filetage interne (27).

9. Valve (1) de gonflage de pneus de véhicules utilitaires, comprenant :
- un corps de valve (10) muni d'une tête (11) sous laquelle s'étend une tige (18) ; dans laquelle un mécanisme de gonflage/dégonflage (180) est disposé à l'intérieur de la tige (18) ; dans laquelle une partie d'extrémité (181) de la tige présente un filetage de capuchon externe (214) ; et dans laquelle la tige (18) présente, sous la tête (11), un filetage d'écrou externe (215) ;
- un capuchon (2) selon l'une quelconque des revendications précédentes, pouvant être vissé sur le corps de valve (10) au niveau du filetage de capuchon externe (214) ;
- un écrou de blocage (30) pouvant être vissé sur le corps de valve (10) au niveau du filetage d'écrou externe (215) ; dans laquelle un diamètre externe maximum du capuchon (20) est inférieur à un diamètre interne minimum de l'écrou (30), de sorte que ce dernier peut coulisser au-dessus du capuchon (20).

10. Valve (1) selon la revendication 9, dans laquelle un diamètre externe maximum de la tige (18) est compris entre 9,2 mm et 10 mm.

11. Valve (1) selon la revendication 9 ou 10, dans laquelle le corps de valve (10) et l'écrou (30) sont en métal et le capuchon (20) est en plastique.
